Europäisches Patentamt

European Patent Office

Office européen des brevets

(19)

(11) Veröffentlichungsnummer: 0 228 535

A1

(12) **EUROPÄISCHE PATENTANMELDUNG**

(21) Anmeldenummer: 86115282.5

(22) Anmeldetag: 04.11.86

(51) Int. Cl.⁴: **H 02 P 5/40**
**H 02 P 7/62**

(30) Priorität: 04.12.85 DE 3542941

(43) Veröffentlichungstag der Anmeldung:
15.07.87 Patentblatt 87/29

(84) Benannte Vertragsstaaten:
DE GB IT SE

(71) Anmelder: Siemens Aktiengesellschaft Berlin und
München
Wittelsbacherplatz 2
D-8000 München 2(DE)

(72) Erfinder: Heining, Hans-Dieter, Dipl.-Ing.
Im Brünnlein 20
D-8540 Rednitzhembach(DE)

(72) Erfinder: Wick, Albert, Dr.
Mozartstrasse 7
D-8523 Baiersdorf/Hagenau(DE)

(54) Verfahren und Vorrichtung zur Bestimmung des Flusswinkels einer Drehfeldmaschine bzw. zum Lageorientierten Betrieb der Maschine.

(57) Um beim Anlauf einer Drehfeldmaschine, z.B. bei Permanterregung, die Feldrichtung ohne mechanischen Geber feststellen zu können, wird dem Ständerstrom oder der Ständerspannung ein hochfrequenter Anteil (iz*) aufgeprägt. In die Ständerwicklungen werden dadurch hochfrequente Spannungsanteile (bzw. Stromanteile) eingekoppelt, deren Hüllkurven ("Enveloppe") der Lage der Feld- oder Läuferachse zugeordnet werden. Vorzugsweise werden von einem Flußrechner (60) die Komponenten eines Modellvektors (FM) errechnet, die ebenfalls Hochfrequenzanteile enthalten. Die in einem Filter (61) isolierten Hochfrequenzanteile werden in einem Mittelwertbildner (62) den Komponenten des Richtungsvektors (fx) zugeordnet. Dadurch ist ein feldorientierter Betrieb einer Synchronmaschine möglich.

85 P 3421 E

FIG 10

EP 0 228 535 A1

Verfahren und Vorrichtung zur Bestimmung des Flußwinkels
einer Drehfeldmaschine bzw. zum lageorientierten Betrieb
der Maschine

Die Erfindung betrifft ein Verfahren zur Bestimmung des Flußwinkels einer Drehfeldmaschine beim Anlauf bzw. ein Verfahren
zum lageorientierten Betrieb einer Drehfeldmaschine mittels
eines den Richtungsvektor eines rotierenden Bezugssystems
festlegenden Lagegebers. Die Erfindung betrifft ferner eine
Vorrichtung zur Durchführung des Verfahrens.

Aus der DE-PS 21 32 178 ist eine dynamische optimale Steuerung einer Synchronmaschine bekannt, bei der ein Geber aus
elektrischen Größen der Maschine die ständerbezogenen Komponenten eines den Fluß beschreibenden Modellvektors errechnet, dessen Richtung einen in Richtung der Feldachse zeigenden Richtungsvektor festlegt. Ein z.B. am Ausgang eines
Drehzahlreglers abgegriffener Sollwert für die feldsenkrechte Komponente des Ständerstromvektors sowie ein Sollwert für
die feldparallele Komponente, die die vom Ständer aufzubringende Magnetisierung angibt, bestimmen einen auf diesen Richtungsvektor bezogenen ("feldorientierten") Sollvektor für den
Ständerstrom der Maschine, aus dem mittels des Richtungsvektors ein Steuervektor ermittelt wird, mit dem ein Umrichter
gesteuert und der Maschine ein entsprechender Ständerstrom
eingeprägt wird.

Als Geber wird häufig ein sogenanntes "Spannungsmodell" verwendet, das den Fluß als Integral der EMK, d.h. als Integral
der Spannung abzüglich der ohmschen und induktiven Spannungsabfälle im Ständer berechnet. Das Spannungsmodell liefert
aber bei niedrigen Drehzahlen nur ein ungenaues Signal, wobei
Gleichspannungsanteile, die als Meßfehler bei den Spannungsmessungen auftreten, und Integrationsfehler der technischen Integratoren zu Fehlbestimmungen führen. Daher ist ein feldorientierter Betrieb mit einem Spannungsmodell nur bei höheren Frequenzen möglich. Außerdem muß für die Integration der EMK die Integrationskonstante durch Vorgabe eines Startwertes gesetzt werden.

Anstelle der Flußrichtung kann als Richtungsvektor in manchen Fällen auch die Achse des EMK-Vektors verwendet werden, die gegenüber der Feldachse im stationären Fall um 90° gedreht ist. Dann kann zwar die Integration entfallen, jedoch ist auch hier ein hinreichend genau geregelter Betrieb bei niedrigen Drehzahlen meist nicht möglich. Vielmehr wird eine andere Möglichkeit zur Erfassung des Richtungsvektors erforderlich.

Ein sogenanntes "Strommodell" bildet die Vorgänge, die im Läufer zur Ausbildung des Flusses führen, aus Momentanwerten von Strom und Läuferlage nach. Hierzu wird aber ein mechanischer Geber zur Bestimmung der Läuferlage benötigt. Dieser Aufwand wird zwar durch einen inkrementalen Drehgeber oder einen anderen nicht-lagecodierten Geber wie z.B. einen reinen Drehzahlmesser verringert, jedoch muß dann beim Stillstand bzw. Langsamlauf der Maschine die Läuferachse auf andere Weise erfaßt ("geortet") werden. Diese Ortung ist selbst bei lagecodierten mechanischen Gebern häufig aufwendig.

Eine Verringerung des Aufwandes für die Bestimmung des Richtungsvektors ist selbst dann wünschenswert, wenn der Betrieb der Synchronmaschine unter Verzicht auf eine hohe Dynamik nicht exakt auf die Feldachse, sondern auf die Läuferachse orientiert wird. So kann z.B. aus den Sollwerten des Ständerstroms ein Näherungswert für die Ankerrückwirkung berechnet werden, um den Ständerstromvektor gegenüber der Läuferachse um einen lastabhängigen Winkel-Sollwert zu verdrehen, der den Winkel zwischen Feldachse und Läuferachse berücksichtigt.

Dann ist aber ebenfalls nur die Bestimmung der Feldachse auf eine Bestimmung der Läuferachse zurückgeführt; die Schwierigkeiten der Läuferortung bei niedrigen Drehzahlen sind dadurch aber nicht behoben.

Für Werkzeugmaschinen, Schrittmotoren und andere Anwendungsgebiete haben sich Synchronmaschinen mit permanenterregtem Läufer bewährt. Die Ankerrückwirkung ist bei derartigen Maschinen vernachlässigbar, so daß eine Läuferorientierung praktisch mit einer Feldorientierung identisch wird und als Geber rein mechanische Läuferstellungsgeber verwendet werden können. Zum richtigen Anfahren sollte jedoch auch hierbei bereits die Anfangsstellung des Läufers bekannt sein, d.h. der Läuferstellungsgeber muß für einen ordnungsgemäßen Anlauf auf den richtigen Startwert gesetzt werden.

Dieses Problem der "Läuferortung" tritt also insbesondere bei Drehfeldmaschinen auf, die im Läufer ausgeprägte Vorzugsrichtungen aufweisen, wie z.B. auch Reluktanzmaschinen. Es ist bei Maschinen, die eine eigene Erregerwicklung besitzen, dadurch lösbar, daß diese Erregerwicklung noch im Stillstand erregt wird und aus der im Ständer induzierten Spannung der sich aufbauende Fluß, der dann in Richtung der Läuferachse zeigt, errechnet wird. Diese Möglichkeit entfällt aber bei Permanenterregung und löst auch nicht die bei niedrigen Drehzahlen ("Langsamlauf") auftretenden Schwierigkeiten.

Für den feldorientierten Betrieb von Asynchronmaschinen scheidet bei niedrigen Drehzahlen das Spannungsmodell zur Lagebestimmung des Flußvektors aus, während das Strommodell die gleichen, mit der Läuferortung verknüpften Probleme aufweist. Auch hier erscheint daher häufig ein aufwendiger mechanischer Geber erforderlich.

Selbst nicht-feldorientierte Steuerungen, wie z.B. eine Schlupfsteuerung oder andere Kennliniensteuerungen, gehen meist von der Läuferlage als Richtungsvektor für die Steuerung des Ständerstroms aus und erfordern einen mechanischen Lagegeber.

Schließlich ist die Erfindung auch weitgehend unabhängig davon, wie die elektrische Speisung der Maschine gesteuert wird. So kann z.B. bei Verwendung eines Zwischenkreisumrichters durchaus die Zwischenkreisspannung durch eine Steuerspannung eingeprägt werden, wobei dann z.B. eine Regel- und Steuereinheit einen Sollwert für die Ständer-Strom-Amplitude als Führungsgröße in das entsprechende Steuersignal zur Steuerung der Zwischenkreisspannung umrechnen kann.

Ein besonderes Problem ist die Erfassung der Läuferlage auch beim Anfahren einer doppeltgespeisten Asynchronmaschine. Bei dieser Technik sind die Läuferwicklungen und die Ständerwicklungen in Reihe geschaltet und der Ständerstrom durchfließt auch den Läufer. Dies geschieht mittels Schleifringen, die auch eine Änderung der Phasenfolge erzwingen. Der Ständerstromvektor und seine relative Lage zum Ständer ist daher gleich dem Läuferstromvektor und dessen Relativlage zum Läufer, wobei der Läufer mit der doppelten Ständerfrequenz rotiert. Mit der Bestimmung der Läuferlage wird dabei gleichzeitig auch die Lage des Feldvektors erfaßt und umgekehrt. Dabei ergibt sich eine besonders einfache Regelbarkeit, insbesondere bei Verwendung der Feldorientierung.

Speist man in eine derartige doppeltgespeiste Asynchronmaschine ohne vorherige Kenntnis der Läuferstellung einen Strom ein, so entwickelt der Motor ein nach Betrag und Vorzeichen nicht vorhersehbares Drehmoment und es muß mit einer unkontrollierten Bewegung des Läufers in die eine oder andere Richtung gerechnet werden.

Der Erfindung liegt die Aufgabe zugrunde, die Lage des Richtungsvektors, der bei einem feldorientierten oder läuferorientierten Betriebe einer Drehfeldmaschine (Asynchronmaschine oder Synchronmaschine) benötigt wird und durch die Lage der Drehfeldachse bzw. Läuferachse gegeben ist, weitgehend durch elektrische Mittel zu bestimmen. Insbesondere bei permanenterregten Synchronmachinen, doppeltgespeisten Asynchronmaschinen oder in anderen Fällen, in denen nichtmechanische Richtungserfassungen bisher versagten, kann auf einen aufwendigen mechanischen Geber ganz verzichtet werden.

Dies wird dadurch erreicht, daß einer elektrischen Zustandsgröße des Ständerwicklungssystems ein hochfrequenter Anteil eingeprägt. Unter den elektrischen Zustandsgrößen des Ständerwicklungssystems sind dabei die Ströme und Spannungen in den einzelnen Ständerspulen verstanden und die Achsen der Spulen, denen der hochfrequente Anteil eingeprägt wird, bestimmen die Richtung des eingeprägten Anteils. Es zeigt sich, daß z.B. bei einem eingeprägten Hochfrequenzstrom in einer oder mehreren Ständerspulen auch in der Spannung dieser Spulen und in den Strömen und Spannungen der anderen Spulen hochfrequente Anteile auftreten, deren Amplitude vom Differenzwinkel zwischen der Flußachse bzw. und der Richtung des eingeprägten Anteils abhängt. Daher wird aus einem Zustandssignal, das eine andere Zustandsgröße des Ständerwicklungssystems abbildet, die Amplitude des hochfrequenten Anteils erfaßt; der gesuchte Richtungswinkel wird aus der Abhängigkeit der erfaßten Amplitude von der vorgegebenen Richtung des eingeprägten Hochfrequenzanteils bestimmt.

Dieses erfindungsgemäße Orten des Läuferwinkels bzw. Feldwinkels kann vorteilhaft zu einem Verfahren zum Betrieb einer Drehfeldmaschine mittels eines elektrischen Lagegebers ausgebildet werden, dessen Ausgangssignal den Richtungsvektor eines lageorientierten Bezugssystems festlegt. Versteht man hierbei unter den elektrischen Zustandsvektoren des Maschinenständers den Ständerstromvektor und den Ständerspannungsvektor, so wird bei diesem Betrieb aus einem lageorientierten Sollvektor für einen der beiden elektrischen Zustandsvektoren, einem gegenüber der Rotationsfrequenz des Bezugssystems hochfrequenten Zusatz-Sollwert für diesen Zustandsvektor und den Signalen des Lagegebers ein auf den Ständer bezogener Steuervektor gebildet. Mittels dieses Steuervektors wird ein Umrichter gesteuert, der den Ständerwicklungen den dem Sollvektor und dem Zusatz-Sollwert entsprechenden elektrischen Zustandsvektor einprägt. Aus einem den anderen der beiden elektrischen Zustandsvektoren abbildenden Signal werden die Hochfrequenzanteile isoliert und aus den Hüllkurven der Hochfrequenzanteile bildet der elektrische Geber die den Richtungsvektor festlegenden Signale.

Eine entsprechende Vorrichtung besitzt vorteilhaft ein Spannungsmeßglied oder andere Mittel zur Erfassung der Ständerspannungen, einen Bandpaß oder Hochpaß zum Isolieren von Hochfrequenzanteilen der Ständerspannungen, einen Mittelwertbildner zur Bildung der Hüllkurven der Hochfrequenzanteile und Mittel zur Bestimmung der Komponenten des Richtungsvektors aus den Hüllkurven. Ferner ist eine Regeleinrichtung vorgesehen mit einem Eingang zur Vorgabe einer Führungsgröße für die Komponenten des Ständerstroms in einem vom Richtungsvektor abhängigen Bezugssystem, mit einem Zusatz-Sollwertgeber zur Erzeugung eines hochfrequenten Zusatzsollwertes und mit einem Ausgang vorgesehen, an dem ein Steuersignal für den Ständerstrom abgreifbar ist. Ein Stromrichter prägt dann dem Ständer der Maschine einen dem Steuersignal entsprechenden Strom ein.

Vorteilhafte Anwendungen und Weiterbildungen der Erfindung sind in den Unteransprüchen gekennzeichnet.

Anhand von drei Ausführungsbeispielen und 15 Figuren wird die Erfindung näher erläutert.

Es zeigen:
Figur 1 die allgemeinen Prinzipien einer feldorientierten
        Regelung anhand einer Regelstruktur,
Figur 2 einen durch einen hochfrequenten Zusatz-Sollwert
        eingespeisten Strom iz,

Figur 3 und 4 die zu Fig. 2 gehörenden hochfrequenten Anteile der Ständerspannungen,

Figur 5 das Prinzip eines ersten Ausführungsbeispiels der Erfindung,

Figur 6 die errechneten Komponenten des den Fluß beschreibenden Modellvektors nach der Erfindung,

Figur 7 die Hochfrequenzanteile der Komponenten aus Fig. 6,

Figur 8 die ständerbezogenen Komponenten des Richtungsvektors,

Figur 9 aus den Komponenten des Richtungsvektors abgeleitete digitale Takt- und Steuersignale zur Kommutierung des Ständerstromes,

Figur 10 eine einfache Anordnung, um eine permanenterregte Synchronmaschine auch bei niedrigen Drehzahlen zu betreiben,

Figur 11 ein dabei verwendetes Vektorfilter,

Figur 12 eine Einrichtung zur Wechselrichtung der gleichgerichteten Hochfrequenzanteile,

Figur 13 eine Anordnung zum Betrieb einer Synchronmaschine mit Maßnahmen zur erfindungsgemäßen Läuferortung,

Figur 14 eine Vorrichtung zum Orten des Flußwinkels einer doppeltgespeisten Synchronmaschine im Stillstand vor dem Anlauf, und

Figur 15 in dieser Vorrichtung auftretende Signale.

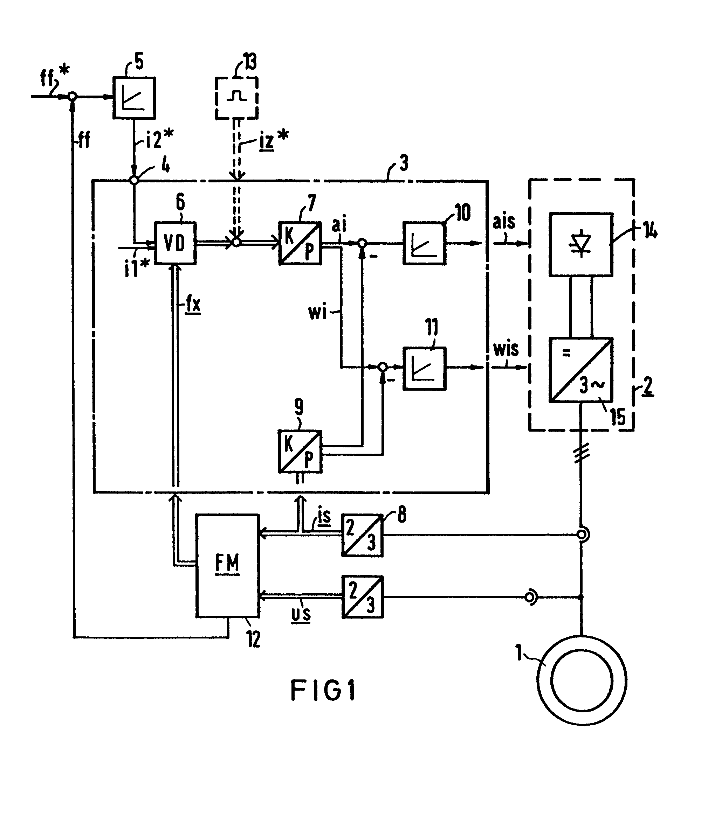

Gemäß Figur 1 wird die Ständerwicklung einer Drehfeldmaschine 1 von einem Stromrichter 2 mit einem Ständerstrom veränderbarer Amplitude und Frequenz gespeist, der von einer Regeleinrichtung 3 bestimmt wird. Hierzu ist einem Eingang 4 der Regeleinrichtung 3 ein z.B. an einem Frequenzregler 5 abgegebener Sollwert i2* für die feldsenkrechte Komponente des Ständerstroms zugeführt, während ein entsprechender Sollwert i1* für die feldparallele Komponente entsprechend der vom Ständer aufzubringenden Magnetisierung gewählt wird, also insbesondere bei einer permanenterregten Synchronmaschine oder bei einer Maschine, die im Ständer nur mit Wirkstrom gespeist wird, zu il* = 0 eingestellt wird. Im letzteren Fall kann ein konstanter Fluß durch eine nicht dargestellte Erregerstrom-Regelung erreicht werden, wobei der Erregerstrom in bekannter Weise aus dem Wirkstrom-Sollwert, dem Sollwert für den Leistungsfaktor und dem gewünschten Fluß berechnet werden kann. Im Fall einer Asynchronmaschine wird il* proportional zum gewünschten Fluß eingestellt.

Der durch il* und i2* feldorientiert vorgegebene Sollvektor i* muß aber ins ständerbezogene Koordinatensystem transformiert und im Fall einer Stromregelung auch mit dem Ständerstrom-Istwert verglichen werden, um zu einem ständerorientierten Steuervektor zu kommen und Amplitude und Phase des vom Umrichter 2 zu liefernden Ständerstroms festzulegen. Im Regelschema der Figur 1 ist zunächst die Koordinatentransformation vorgenommen, die einer Drehung des Sollvektors i* um den Flußwinkel fx entspricht. Da im allgemeinen vektorielle Größen am günstigsten in Form kartesischer Komponenten verarbeitet werden, wird der Flußwinkel fx als vektorielles Signal fx über eine Doppelleitung für die beiden ständerbezogenen Komponenten fa = cos fx, fb = sin fx eines zum Flußvektor parallelen Richtungsvektors übertragen. Koordinatentransformationen werden dann durch Vektordreher vollzogen.

Der Vektordreher 6 liefert also dann den ständerorientierten Stromvektor, der durch einen Koordinatenwandler 7 in seine polaren Koordinaten, nämlich die Stromamplitude ai und die Stromphase wi umgerechnet wird.

Die drei Phasenströme, die den schiefwinkeligen Komponenten des Ist-Ständerstromvektors entsprechen, werden von einem 3/2-Koordinatenwandler 8 in die kartesischen Komponenten eines ständerbezogenen Ist-Stromvektors is umgewandelt, aus denen ein Koordinatenwandler 9 die entsprechenden Istwerte von Amplitude und Phase liefert. Ein Amplitudenregler 10

9

sowie ein Phasenregler 11 liefern dann die polaren Komponenten eines Steuervektors, mit denen die Amplitude ais und die Phase wis des Stromrichter-Ausgangsstroms gesteuert wird.

Zur Bildung des Richtungsvektors $\underline{fx}$ ist ein Geber 12 erforderlich. Dieser enthält bei feldorientierter Regelung häufig einen Flußrechner, der aus elektrischen Größen der Maschine die ständerbezogenen Komponenten FMa und FMb eines den Fluß beschreibenden Modellvektors $\underline{FM}$ berechnet. Im vorliegenden Fall dienen als elektrische Größen insbesondere der am 2/3-Wandler abgegriffene Ständerstromvektor $\underline{is}$ sowie der an einem entsprechenden 2/3-Wandler abgegriffene Vektor $\underline{us}$ für die Ständerspannung. Der Fluß ist nämlich als Integral der EMK gegeben, d.h. er kann bei hinreichend genauen Parameterwerten r für den Ständerwiderstand und L für die Streuinduktivität berechnet werden als

$$\int (\underline{us} - r \cdot \underline{is}) \, dt - L \cdot \underline{is}.$$

Beim Stand der Technik kann der auf diese Weise rechnerisch ermittelte Modellvektor $\underline{FM}$, der bezüglich einer raumfesten Ständerachse den Winkel $fx = \arctan FMb/FMa$ beschreibt, in den Richtungsvektor $\underline{fx}$ umgewandelt werden, wobei ferner auch die Feldfrequenz ff, d.h. die zeitliche Ableitung des Feldwinkels fx, gebildet werden kann, um am Istwerteingang des Frequenzreglers 5 mit einem entsprechenden Frequenzsollwert ff* verglichen zu werden.

Wie bereits erwähnt wurde, ermöglicht ein auf dem "Spannungsmodell" aufbauender, elektrischer Geber 12 den feldorientierten Betrieb der Drehfeldmaschine 1 nur bei höheren Frequenzen. Dies ist unabhängig vom inneren Aufbau der Regeleinrichtung 3. So kann z.B. der Stromistvektor $\underline{is}$ mittels eines Vektordrehers ins Feldkoordinatensystem transformiert werden, wobei dann nach Umwandlung in polare Koordinaten die Regelabweichung für die Amplituden der Vektoren $\underline{i*}$ und $\underline{is}$ die Amplitude ais des Steuervektors und die Regelabweichung der Winkel die entsprechende Steuergröße wis für Phase und Frequenz des

10

Umrichters liefert. Es kann aber auch die Regelabweichung der feldorientierten oder ständerorientierten kartesischen Komponenten gebildet werden, die dann die kartesischen Komponenten des Steuervektors liefern.

Gemäß der Erfindung ist nun vorgesehen, dem Ständerstrom mittels eines gegenüber der Frequenz des Bezugsvektors hochfrequenten Zusatz-Sollvektors iz* einen hochfrequenten Anteil zu überlagern. Die hierzu nötige Ergänzung der bekannten Vorrichtung ist in Fig. 1 in unterbrochenen Linien dargestellt, wozu ein Zusatz-Sollwertgeber 13 vorgesehen ist. Die Überlagerung kann durch Vektoraddition zum feldorientierten Sollvektor i* oder zu dem entsprechenden, ins ständerorientierte Koordinatensystem übertragenen Vektor oder auf eine andere, mathematisch äquivalente Weise erfolgen.

Folglich enthält auch der Steuervektor einen entsprechend hochfrequenten Anteil, der dem Ständerstrom über den Stromrichter 2 eingeprägt wird. Der Stromrichter 2 ist dabei als ein Gleichstromsteller 14 am Gleichstromeingang eines Wechselrichters 15 dargestellt, wobei über die Amplitudensteuergröße(ais)eine dem überlagerten Hochfrequenzanteil entsprechende rasche Verstellung der Stromamplitude möglich ist. Handelt es sich bei dem Zusatzvektor iz* um einen Vektor mit rasch veränderlicher Richtung, so ist auch die Steuergröße wis entsprechend rasch veränderlich. Ein umlaufender Zusatzvektor ist aber nicht unbedingt erforderlich.

Ferner ist der elektrische Geber von Meßgliedern für die Ständerspannung gespeist, deren Signale gegebenenfalls über den Flußrechner einem Bandpaß oder Hochpaß zum Isolieren von Hochfrequenzanteilen in den gemessenen Spannungen zugeführt sind. Die Hüllkurven der Hochfrequenzanteile, die von einem Mittelwertbildner erfaßt werden können, werden durch geeignete Mittel den Komponenten des Richtungsvektors fx zugeordnet. Der hierzu erforderliche Aufbau des elektrischen Gebers 12 wird später erläutert.

Da der zugrunde liegende physikalische Effekt eine Vertauschung von Strom und Spannung gestattet, werden im folgenden Spannung und Strom einer Ständerspule als "die beiden Zustandsgrößen der Spule", die Zustandsgrößen der Spulen als "Zustandsgrößen des Ständerwicklungssystems" und Ständerstromvektor und Ständerspannungsvektor als "Zustandsvektoren des Ständers" bezeichnet.

Die Erfindung geht von der Beobachtung aus, daß ein in eine der Ständerspulen eingeprägter hochfrequenter Anteil der einen elektrischen Zustandsgröße einen Hochfrequenzanteil der anderen Zustandsgröße der gleichen Spule und Hochfrequenzanteile der Zustandsgrößen der anderen Spulen induziert. Die Hochfrequenzanteile hängen von der Lage der Läufer- bzw. Feldachse ab.

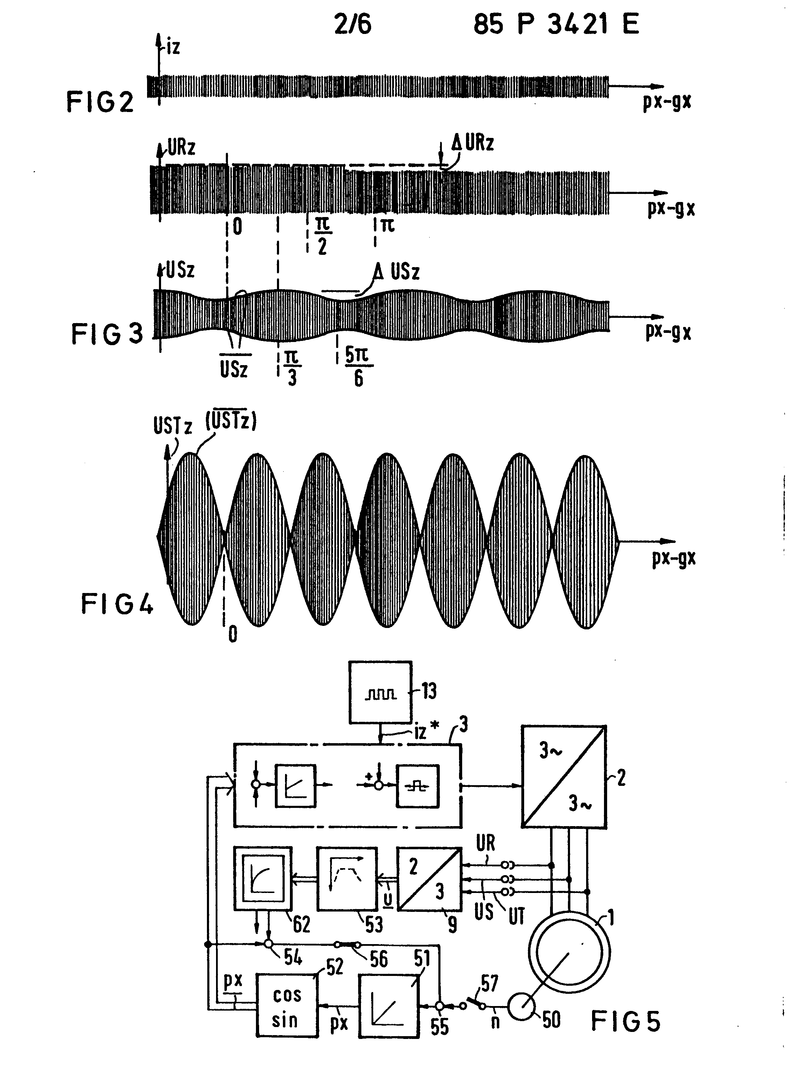

Diese überraschende Beobachtung sei an einem Versuch erläutert, bei dem über den Motoranschluß R ein Strom $i_z$ (Fig.2) mit 250 Hz und einer effektiven Stromamplitude von 4,2 A eingespeist und über den Sternpunkt abgeführt wird. Die Achse der von diesem eingeprägten hochfrequenten Strom $i_z$ durchflossenen Spule gibt diesem eine Richtung mit dem Richtungswinkel $g_x$ vor. Entsprechend den Verlusten in dieser Spule tritt ein Spannungsabfall auf, dessen Wert zunächst in dem Fall, daß der Läufer vollkommen rotationssymmetrisch aufgebaut ist und weder einen Permanentmagneten noch eine Läuferwicklung trägt, beispielsweise etwa $(U_{Rz})_o = 340$ mV entspricht und die zu $g_x$ parallele Komponente des Ständerspannungsvektors angibt. Auch in den beiden anderen Wicklungsachsen treten Hochfrequenzanteile der Spannungen auf, z.B. $(U_{Sz})_o \approx 100$ mV.

Die Ständerwicklungen sind aufgrund ihrer geometrischen Anordnung, bei der sie sich in ihren Randbereichen gegenseitig überlappen, induktiv miteinander verkoppelt. Unter den genannten Bedingungen heben sich im Hochfrequenzanteil (UStz) der verketteten Spannung zwischen beiden anderen Wicklungen die eingekoppelten Spannungen auf, d.h. (USTz)o = 0. Dabei entspricht (USTz) der anderen Komponente des Spannungsvektors.

Ist jedoch ein ausgeprägter Luftspaltfluß vorhanden, z.B. indem am Läufer ein Permanentmagnet angebracht ist, so ist bereits die zur gleichen Spule gehörende Spannung URz gemäß Fig. 3 vom Differenzwinkel px-gx abhängig, der daher zumindest theoretisch aus der Amplitude der Größen URz bestimmt werden kann. Die Minima und Maxima treten dabei auf, wenn der Fluß der Sättigung dieser Spule gleich- oder entgegengerichtet ist (Flußwinkel fx = 0, $\pi$, ...). Bei der Bauart und Dimensionierung der üblichen Maschinen ist diese lageabhängige Beziehung zwischen den beiden Zustandsgrößen einer einzigen Spule allerdings gering und beträgt z.B. $\Delta URz/(URz)o \approx 6\%$.

Die gleiche Sättigung bzw. Entsättigung bewirkt aber der Fluß bei fx = $\frac{\pi}{3}$, $\frac{5\pi}{3}$, ... auch in den Überlappungsbereichen der Wicklungen R und S und daher zeigt die Spannung USz an der Spule S die angegebene Abhängigkeit vom Feldwinkel fx mit $\Delta USz/(USz)o \approx 30 \%$.

Für die Spannung UTz gilt eine um $\frac{2\pi}{3}$ phasenverschobene Kurve, so daß sich für USTz und die entsprechende Komponente des Spannungsvektors die Abhängigkeit der Fig. 4 ergibt. Die Hüllkurven $\overline{USTz}$ zeigen also ausgeprägte Extrema mit USTz/(URz)o $\approx 10\%$.

Lageabhängige Hüllkurven von Hochfrequenzanteilen, deren Amplitude den Differenzwinkel px-gx zu ermitteln gestatten, werden auch erhalten, wenn in die eine Spule hochfrequente Spannungen anstelle des Stromes iz eingeprägt werden.

Ist kein Sternpunkt der Ständerwicklungen vorhanden oder ist der Sternpunkt nicht angeschlossen, so durchfließt der Hochfrequenzstrom iz stets mehrere Wicklungen und es ergeben sich etwas andere Verhältnisse. Aber auch dann kann aus den Spannungen, insbesondere aus den Hüllkurven der Hochfrequenzanteile in den kartesischen Komponenten des Spannungsvektors, die Lage des Feldwinkels einer permanenterregten Synchronmaschine ermittelt werden. Dies gilt auch bei Asynchronmaschinen, deren Läuferwicklung im allgemeinen rotationssymmetrisch aufgebaut ist und deren Fluß vom Ständerstrom induziert wird.

Bei Schenkelpolmaschinen, Synchronmaschinen mit Erregerwicklung und anderen Maschinen mit unsymmetrischem Läufer kommt hinzu, daß die Ständerwicklungen über wirksame Läuferinduktivitäten miteinander verkoppelt sind, die von der relativen Lage zwischen Läufer und Ständer abhängen. Auch bewirken die Ständerströme selbst in der Erregerwicklung Ströme, die in Richtung der Läuferachse fließen und auf die Ständerwicklungen zusätzlich verkoppelnd rückwirken. In Analogie zur Ankerrückwirkung sind dann die Hüllkurven der hochfrequenten Ständerspannungsanteile je nach Betriebszustand und Auslegung der Maschine nicht der Feldachse, sondern der Läuferachse zuzuordnen.

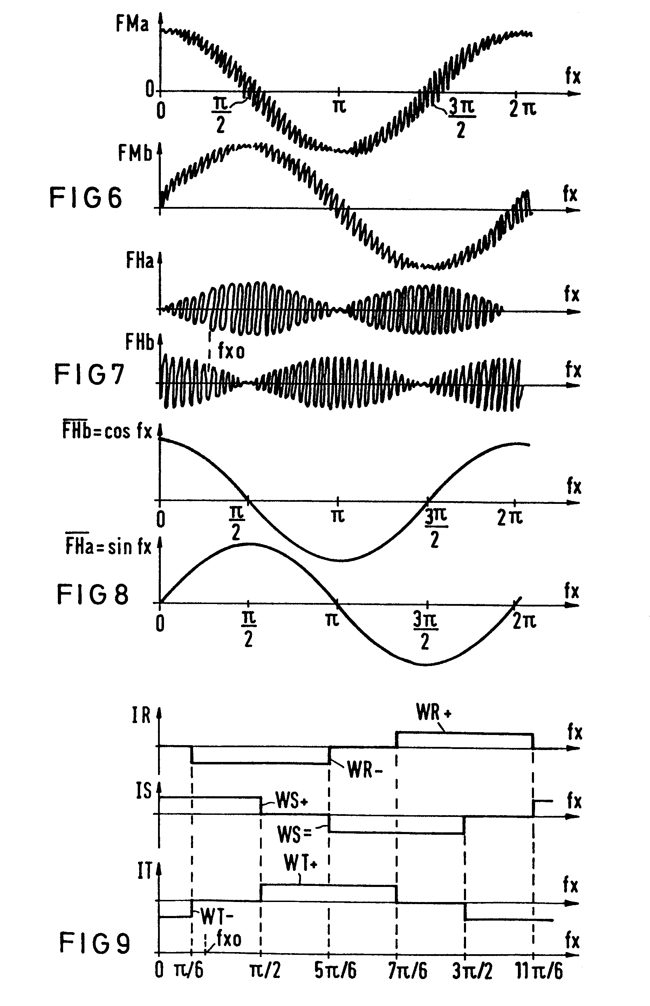

Als erste Anwendung des Verfahrens ist in Fig. 5 der Start einer Drehfeldmaschine 1 betrachtet, deren Umrichter 2 von einer Steuer- und Regeleinrichtung 3 in Abhängigkeit von der Läuferlage gesteuert und deren Drehzahl n durch einen einfachen Drehzahlgeber 50 erfaßt wird, mit einem nachgeschalteten Integrator 51 und Funktionsgebern 52 zur Bildung der Komponenten $\cos(\int n.dt)$, $\sin(\int n.dt)$ des Richtungsvektors $\underline{px}$ für die Läuferlage.

Es kann sich hierbei um eine permanenterregte Synchronmaschine handeln, deren Läuferwinkel px gleich dem Feldwinkel fx ist und die gemäß der Regeleinrichtung 3 der Figur 1 feldorientiert betrieben wird. Es kann sich auch um eine feldorientiert betriebene Asynchronmaschine handeln, deren

14

Regeleinrichtung ein Strommodell zur Erfassung des Feldwinkels fx bei kleinen Drehzahlen enthält und der daher ebenfalls die Läuferlage eingegeben werden muß. Es kann sich.
aber auch z.B. um eine Schlupfsteuerung einer Asynchronmaschine oder um eine andere läuferorientierte Regelung oder
Steuerung einer Drehfeldmaschine handeln. In allen Fällen
muß der Integrator 51 beim Anlauf auf den der tatsächlichen
Läuferstellung entsprechenden Wert px gesetzt werden.

Zum Anfahren aus dem Stillstand kann z.B. durch die Sollwerte $i_1^* = 0$ (oder auch $i_1^* = const$), $i_2^* = 0$ ein Sollvektor
in einem auf den Richtungsvektor px orientierten Koordinatensystem vorgegeben werden, aus dem die Einrichtung 3 auf
irgendeine Weise einen in Richtung px weisenden Steuervektor für die Steuerung des Umrichters 2 bildet. Da aber der
Integrator 51 zunächst auf einem beliebigen, zufälligen
Wert pxo steht, wird auch der Umrichter mit einer entsprechend zufälligen Richtung seines Ausgangsstromes angelassen.
Der Zusatz-Sollwertgeber 13 (Sollwert iz*) prägt in dieser
zufälligen Richtung pxo den hochfrequenten Strom iz ein und
die an den Maschinenklemmen gemessenen Spannungen UR, US,
UT, die vom 3/2-Wandler 9 in die Komponenten des Spannungsvektors u umgerechnet werden, bestehen praktisch nur aus
Hochfrequenzanteilen gemäß einer beliebigen Stelle der Abszisse in Fig. 3.

Diese Hochfrequenzanteile (hier: die Hochfrequenzanteile in
den Komponenten des Spannungsvektors u) werden in einem Filter 53 von Gleichanteilen, z.B. von den Gleichspannungsfehlern der Spannungsmeßglieder, isoliert und ein Mittelwertbildner 62, dessen Aufbau erst später erläutert werden wird,
ordnet die Hüllkurve dieser Hochfrequenzanteile den gesuchten
Komponenten des Richtungsvektors zu.

Daher kann das Integrator-Ausgangssignal px nunmehr auf den
richtigen Winkelwert gesetzt werden. Im Beispiel der Fig. 5 geschieht dies, indem die Abweichung einer kartesischen Komponente als Maß für die Winkelabweichung des Integrator-Ausgangssignals vom tatsächlichen Richtungswinkel an der Vergleichsstelle 54 gebildet und an einer Stelle 55 dem Integrator-Eingang aufgeschaltet wird. Dadurch wird px bis zur Gleichheit der Winkel verstellt.

Damit ist also bei der Synchronmaschine der Richtungsvektor px, der im Stillstand die Läuferachse und die Feldachse gleichzeitig beschreibt, geortet. Da außerdem der Umrichter 2 in Abhängigkeit von px angelassen wurde, ist auch die Richtung des eingeprägten Stromvektors nunmehr auf den zu px gehörenden Wert gesetzt. Bei einer Asynchronmaschine, bei der im Stillstand die Feldachse in Richtung des Ständerstroms zeigt und die Läuferachse nur eine zweitrangige Rolle spielt, wird daher durch diesen Vorgang letztlich der beim Anlassen des Umrichters auftretende Stromvektor geortet.

Nach dieser Ortung kann durch Hochfahren des Sollwertes i2* der Maschine 1 ein Drehmoment eingeprägt werden und die am Drehzahlgeber 50 abgegriffene Drehzahl n bestimmt nun durch Schließen des Schalters 57 die Richtungsänderung von px. Die erfindungsgemäßen Elemente 9, 53 und 62 können dann durch Öffnen des Schalters 56 außer Eingriff gebracht werden. Ist jedoch der Drehzahl-Istwert n bei niedrigen Drehzahlen ungenau und/oder der Integrator 51 mit Integrationsfehlern behaftet, so kann es vorteilhafter sein, erst bei höheren Drehzahlen, bei denen u.U. die Bestimmung der Hüllkurven und deren Zuordnung zu den Komponenten von px zu Schwierigkeiten führen, die Schalter 56 und 57 zu betätigen.

Prinzipiell kann der mechanische Geber 50 auch ganz weggelassen oder durch einen die Spannungen ausnutzenden, elektrischen Geber, insbesondere unter Verwendung eines Flußrechners, ersetzt werden. Dabei ist zwar die Spannung URz in der von Hochfrequenzstrom durchflossenen Spule nur wenig von der

16

Läuferstellung abhängig (Fig. 3), aber die anderen Spannungen (Fig. 4), insbesondere die verkettete Spannung (d.h. die zum Stromvektor senkrechte Komponente des Spannungsvektors) läßt innerhalb ihrer Periodizität eine bessere Zuordnung ihrer Hüllkurve zum Winkel px zu. Werden daher nur die Spannungen ausgewertet, so werden zweckmäßig nur die Spannungen an den Wicklungen, auf die der Zusatz-Sollwert des Stromes nicht wirkt, benutzt und jedesmal, wenn im Stromrichter die Stromflußrichtung weitergeschaltet wird, wird auch die Erfassung oder Auswertung der Hüllkurven weitergeschaltet.

Da der Fluß aber mit der EMK verknüpft ist und daher stromproportionale Spannungsabfälle bereits kompensiert werden, ergibt sich das in den folgenden Figuren erläuterte, vereinfachte Verfahren, das experimentell an einer Maschine bestätigt wurde, deren Läufer keinerlei Wicklung enthält.

Tatsächlich erzeugt ein hochfrequenter Anteil im Ständerstrom bei einer Maschine, deren Läufer weder eine geometrische Unsymmetrie aufweist, noch von einem Gleichfuß durchsetzt ist, praktisch kein Signal am Ausgang des Spannungsmodells.

Wird nun durch Anbringen von Permanentmagneten oder durch eine entsprechende stromdurchflossene Wicklung im Läufer ein konstanter Fluß erzeugt, treten die in Fig. 6 gezeigten Kurven für die Komponenten FMa, FMb des im Spannungsmodell errechneten, den Fluß beschreibenden Modellvektors FM auf, sobald der Läufer von seiner angekoppelten Last mechanisch bewegt wird. Sie zeigen in Abhängigkeit vom Feldwinkel fx einen entsprechend der Feldfrequenz cosinusförmigen und sinusförmigen Verlauf, dem jeweils ein der eingeprägten Zusatz-Hochfrequenz entsprechender Hochfrequenzanteil überlagert ist. Werden diese Hochfrequenzanteile von der Grundschwingung isoliert, so ergeben sich die Anteile FHa und FHb der Fig. 7.

Nach einer Phasenverschiebung um 90$^o$ fallen die Hüllkurven FHa und FHb mit den Grundschwingungen von FMa und FMb zusammen, d.h. sie sind den kartesischen Komponenten des Richtungsvektors fx gleichwertig. Die Hüllkurven entsprechen dabei den jeweils über eine Halbperiode der Hochfrequenz gemittelten Amplituden der Hochfrequenzanteile FHa und FHb.

Werden daher insbesondere zur Bildung der Hüllkurven $\overline{FHa}$ und $\overline{FHb}$ die isolierten Anteile FHa und FHb gleichgerichtet, geglättet und mit einem jeweils nach einem Nulldurchgang wechselnden Vorzeichen bewertet, so geben diese Werte $\overline{FHa}$ und $\overline{FHb}$ die ständerorientierten kartesischen Komponenten eines auf der Feldachse senkrecht stehenden Richtungsvektors an. Die Komponenten fa und fb des in die Feldachse selbst zeigenden Richtungsvektors fx sind auf diese Weise den Mittelwerten $\overline{FHb}$ und $\overline{FHa}$ zugeordnet (Fig. 8).

Der Vorteil der Bildung des Modell-Feldwinkels fx aus den Komponenten $\overline{FHa}$ und $\overline{FHb}$ besteht nun darin, daß die in Fig. 8 dargestellte Zuordnung von $\overline{FHa}$ und $\overline{FHb}$ zum Feldvektor fx auch bei kleinen Drehfrequenzen bis zum Stillstand erhalten bleibt, obwohl die drehfrequente Grundwelle der Komponenten FMa und FMb von der in Fig. 6 gezeigten korrekten Zuordnung zum Feldvektor fx in der Regel wegen der Rechenfehler des Flußrechners abweicht.

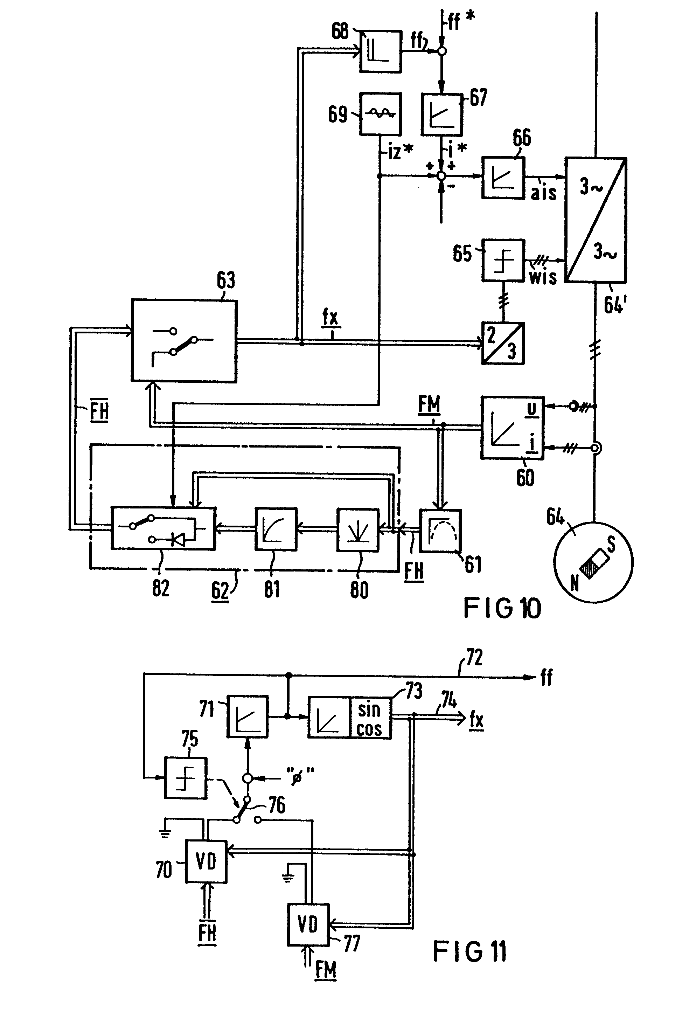

Für den einfachen Fall, daß für eine Synchronmaschine mit trapezförmiger EMK ("bürstenlose Gleichstrommaschine") ein (bis auf den überlagerten Hochfrequenzanteil konstanter) Eingangsgleichstrom vom Stromrichter ("elektrischer Kommutator") in Stromblöcken mit einer Länge von je 120$^o$ jeweils nach einer Läuferdrehung um 60$^o$ el auf die nächsten Ständerwicklungen der Synchronmaschine durchgeschaltet wird, können also durch entsprechende Grenzwertmelder für die Komponenten fa und fb die in Fig. 9 gezeigten Takt- und Steuersignale WR+, WR-, ... WT- für die Ansteuerung der Wechselrichterventile gebildet werden. Sie steuern den Stromvektor is so, daß er

18

diskontinuierlich nacheinander sechs ständerbezogene Winkel wis annimmt, während seine Richtung gegenüber der Feldachse stets $90^o \pm 30^o$ el beträgt.

Der elektrische Geber besteht bei dem Ausführungsbeispiel nach Fig. 10 aus einer Reihenschaltung eines Spannungsmodells 60, eines auf die Hochfrequenz (z.B. etwa 250 Hz) abgestimmten Bandpaßfilters 61 (oder Hochpaßfilters) und eines Mittelwertbildners 62, dem entsprechend den Schaltern 56 und 57 (Fig. 5) noch ein Bauglied 63 insbesondere dann nachgeschaltet sein kann, wenn für höhere Drehzahlen der permanenterregten Synchronmaschine 64 eine ruckfreie Umschaltung von den gemäß dem Verfahren ermittelten Richtungsvektor auf den vom Spannungsmodell 60 ermittelten Vektor vorgesehen ist.

Der auf diese Weise gebildete Richtungsvektor _fx_ wird mittels eines 2/3-Wandlers in seine schiefwinkeligen Komponenten zerlegt, die den Projektionen der Läuferachse auf die drei Wicklungsachsen des Ständers entsprechen. Ein Winkeldiskriminator 65 sorgt dafür, daß der Strom in der Ständerwicklung jeweils nach einer Läuferbewegung um $60^o$ el weitergeschaltet wird. Dies geschieht mit den Takt- und Steuersignalen der Fig. 9, die dem Signal wis der Fig. 1 entsprechen.

Die Amplitude des Ständerstroms wird von einem Stromregler 66 geliefert, der den an einem Drehzahlregler 67 abgegriffenen Sollwert i* mit dem Istwert is der Ständerstromamplitude vergleicht. Der Istwert ff für den Drehzahlregler kann als Frequenz des Richtungsvektors _fx_ mittels einer Differenzierschaltung 68 gebildet werden und ist bei der permanent erregten Maschine gleich der Läuferdrehzahl.

Für die Ortung ist nun ein Zusatz-Sollwert iz* in Form einer etwa sinusförmigen Schwingung von 250 Hz von einem Zusatz-Sollwertgeber 69 bereitgestellt und über den Stromregler 66 der Amplitude des Steuerstroms aufgeschaltet.

Beim Stillstand der Maschine (ff* = 0, i* = 0) ist die Läuferstellung, also die Richtung des Läuferflusses, unbekannt. Der vom elektrischen Geber gelieferte Richtungsvektor fx besitzt einen zufälligen, beliebigen Wert. Es sei z.B. angenommen, daß der Richtungsvektor fx mit der Wicklungsachse der an die Phase R angeschlossenen Ständerwicklung den zufälligen Wert fx = $0^{O}$, die tatsächliche Läuferachse aber den (unbekannten) Wert fxo = $40^{O}$ aufweist. Gemäß Fig. 5 wird vom Winkeldiskriminator 65 durch die Steuersignale WS+ und WT- eine Ventilkombination im Stromrichter 64' vorgegeben, bei der der durch die Amplituden-Steuergröße(ais)vorgegebene Ständerstrom in die Wicklung S eingespeist und über die Wicklung T abgeführt wird. Dies entspricht einem Winkel des Ständerstromvektors gegenüber der R-Wicklungsachse um $90^{O}$. Mit der Freigabe des Zusatz-Sollwertgebers 69 wird der Maschine also ein im 250 Hz-Takt oszillierender Ständerstromvektor in dieser Richtung eingeprägt. Die Maschine vermag dieser Hochfrequenz nicht zu folgen und verharrt im Stillstand.

Durch die Hochfrequenzeinspeisung sollte daher die von der Permanenterregung induzierte EMK konstant bleiben und der Flußrechner keine Änderung des Modellvektors FM zeigen, der beim Einschalten auf einem sich zufällig ergebenden Anfangswert steht. Die Permanenterregung des Läufers bewirkt jedoch eine örtliche Sättigung im Ständer, was zu unterschiedlichen Ständerreaktanzen bezüglich der Läuferlängs- und querachse und zu unterschiedlichen magnetischen Verkopplungen der einzelnen Phasenwicklungen führt.

Daher werden in die verschiedenen Ständerwicklungen unterschiedliche hochfrequente Spannungsanteile eingekoppelt, und die Komponenten des errechneten Fluß-Modellvektors FM zeigen entsprechend Fig. 7 die für die tatsächliche Lage fxo angegebenen Hochfrequenzanteile. Die durch Amplituden-Mittelung gebildeten Komponenten nehmen die Werte
$$\overline{FHa} = \cos{(fxo)} = fb \quad \text{und} \quad \overline{FHb} = \sin{(fxo)} = fa \quad \text{an. Dies sind}$$

20

die kartesischen Komponenten eines zur Läuferachse senkrechten Vektors $\overline{FH}$ bzw. eines parallelen Vektors fx. Dadurch sind
nunmehr für den zugehörigen Richtungswinkel fx der richtige
Startwert fxo = 40$^O$ und für den Stromrichter die Steuersignale WR-, WS+ bestimmt (Fig. 9). Wird jetzt der Frequenzsollwert ff* hochgefahren und somit über die Regeleinrichtung 66,
67 der Mittelwert der Ständerstromamplitude angehoben, so
setzt sich der Läufer langsam in Bewegung. Nach einer Drehung
um 50$^O$el wird dann im Stromrichter 64' der Steuerwinkel wis
weitergeschaltet und die Maschine gerät in eine durch den
Drehzahlregler regelbare Rotation. Dadurch wächst in den Komponenten des vom Spannungsmodell 60 errechneten Modellvektors
$\underline{FM}$ der Grundschwingungsanteil der in Fig. 6 gezeigten Komponenten, der aber vom Filter 61 bei der Bildung der Hochfrequenzanteile FHa und FHb unterdrückt wird.

Für höhere Frequenzen ermittelt das Spannungsmodell 60 einen
Modellvektor $\underline{FM}$, der mit zunehmender Frequenz an Genauigkeit
gewinnt und mit der Richtung der tatsächlichen Feldachse
(Läuferachse) zusammenfällt. Daher ist hier der erfindungsgemäße Betrieb der Synchronmaschine nur für die Ortung des
Feldwinkels im Stillstand und für den Betrieb bei niedrigen
Drehzahlen vorgesehen, während für höhere Drehzahlen der
Richtungsvektor fx direkt auf den vom Spannungsmodell gelieferten Bezugsvektor $\underline{FM}$ umgeschaltet wird. Hierzu dient
das Bauelement 63, das zusätzlich als Vektorfilter zur Ermittlung der Grundschwingung des Vektors $\underline{FH}$ dient.

Bei einem derartigen Vektorfilter, das z.B. aus der
DE-OS 33 47 543 bekannt ist, werden die Komponenten eines
rotierenden Vektors mittels frequenzveränderlichen Transformationselemente in ein rotierendes Bezugssystem transformiert, wozu nach Fig. 11 der Vektordreher 70 vorgesehen
ist, der mit den Komponenten $\overline{FHa}$ und $\overline{FHb}$ des Vektors $\overline{FH}$
gespeist ist. Ein Sollwert (z.B. der Sollwert Null für eine
transformierte Vektorkomponente) legt eine gewünschte Phasenverschiebung zwischen dem rotierenden Vektor und der Abszisse des rotierenden Bezugssystems fest, wobei ein Phasendifferenzregler 71 durch Ausregeln dieser Phasenverschiebung die Frequenz der frequenzveränderlichen Transformationselemente bildet und somit das rotierende Bezugssystem dem rotierenden Vektor synchron nachführt. Die Rotationsfrequenz des Bezugssystems entspricht daher der Grundfrequenz des Vektors und kann an einem Ausgang 72 als Frequenz-Istwert ff abgegriffen werden, wobei die Transformationselemente selbst mittels eines Vektoroszillators 73 als cos $\left(\int ff.dt\right)$ und sin $\left(\int ff.dt\right)$ gebildet und einerseits auf den Winkeleingang des Vektordrehers 70 rückgeführt, andererseits als kartesische Komponenten des Richtungsvektors $\underline{fx}$ an einem Ausgang 74 abgegriffen werden.

Ein derartiges Vektorfilter ermöglicht auch die problemlose Umschaltung des Betriebs vom Vektor $\overline{FH}$ auf den Modellvektor $\underline{FM}$. Hierzu schaltet das Ausgangssignal eines Schwellwertgebers 75 bei einer vorgegebenen Grenzdrehzahl den Schalter 76 am Istwerteingang des Reglers 71 auf den Ausgang eines Vektordrehers 77, der vom Modellvektor $\underline{FM}$ gespeist ist. Bei dieser Umschaltung treten keine Diskontinuitäten des Richtungsvektors $\underline{fx}$ auf.

Um von den Hochfrequenzanteilen FHa und FHb zu den Mittelwerten $\overline{FHa}$ und $\overline{FHb}$ zu gelangen, enthält der Mittelwertbildner 62 der Fig. 10 einen Gleichrichter 80, der den Momentanbetrag der Hochfrequenzschwingungen liefert. Jeder Momentanwert wird in einer nachfolgenden Wechselrichtungs-Schaltung mit einem Vorzeichen bewertet, das sich jeweils nach einem Nulldurchgang ändert. Vorzugsweise wird der Vorzeichenwechsel aber nicht direkt aus dem Nulldurchgang selbst bestimmt, sondern aus der Phasenlage der hochfrequenten Anteile bezüglich des hochfrequenten Zusatzsollwertes. Vorzugsweise ist noch ein Glättungsglied 81 in Reihe geschaltet, das mit einer kleinen, ungefähr auf die Hochfrequenz abgestimmten Glättungszeit ausgestattet ist und somit bis auf geringe Ober-

22

schwingungen die Momentanamplitude der die Hochfrequenzanteile einschließenden Hüllkurven liefert.

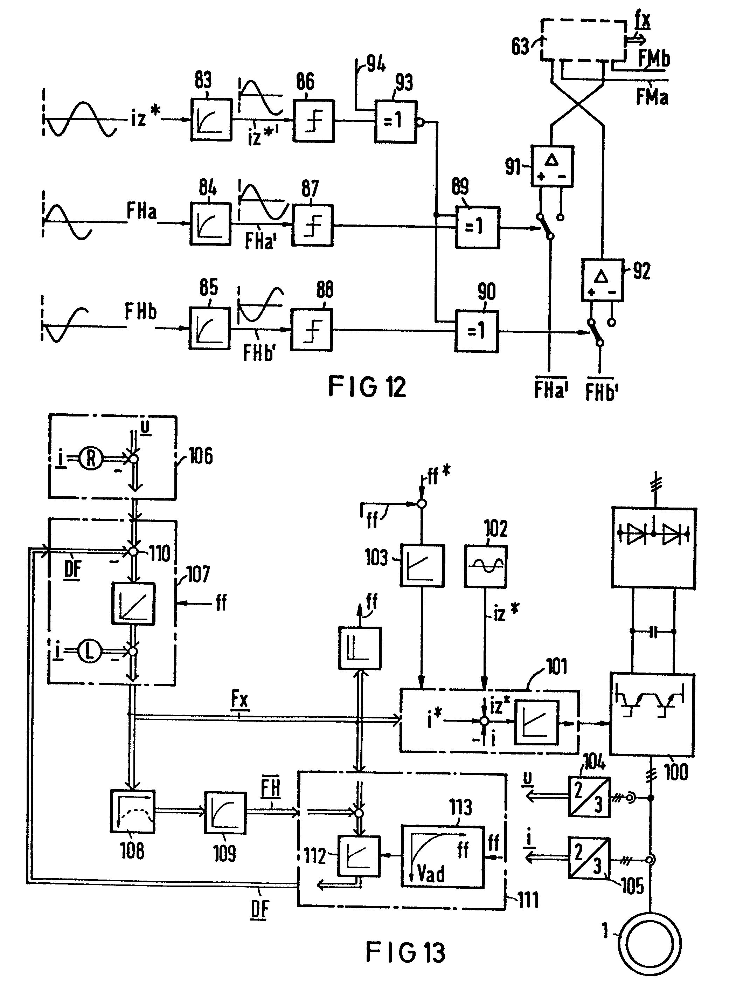

Den Aufbau einer geeigneten Wechselrichtungs-Schaltung 82 zeigt Fig. 12.

Dabei wird davon ausgegangen, daß die hochfrequenten Anteile jeweils bei einem Nulldurchgang ihrer Hüllkurven einen Phasensprung um 180° erleiden. Wird daher bei einer einmaligen Justierung festgestellt, welchen Phasenwinkel die ungeglätteten Hochfrequenzanteile FHa und FHb in Bezug auf ein konstantes Hochfrequenzsignal gleicher Frequenz bei einer vorgegebenen Läuferstellung haben und mit welchen Vorzeichen die gleichgerichteten Komponenten $\overline{FHa'}$ und $\overline{FHb'}$ zur Beschreibung dieser Läuferstellung zu bewerten sind, so braucht bei der Anwendung des Verfahrens lediglich überwacht zu werden, ob die tatsächlich auftretenden Phasenverschiebungen diesen der Justierung zugrunde gelegten Wert aufweisen oder um 180° verschoben sind.

Als hochfrequentes Bezugssignal kann insbesondere der Zusatz-Sollwert iz* selbst verwendet werden. Gemäß Fig. 12 sind Verzögerungsglieder 83, 84 und 85 vorgesehen, deren Verzögerungszeit bei der Justierung so eingestellt wird, daß z.B. bei einer Läuferachse, die in Richtung der R-Wicklungsachse zeigt und durch den Richtungswinkel fx = 0 beschrieben ist, der verzögerte, nicht-gleichgerichtete Anteil FHa' gleichphasig mit dem entsprechenden, verzögerten Zusatz-Sollwert iz*' und der entsprechende verzögerte, nicht gleichgerichtete Anteil FHb' gegenphasig mit iz*' ist. Für den weiteren Betrieb braucht jetzt lediglich durch Polaritätsdetektoren 86, 87 und 88 und entsprechende EXOR-Gatter 89 und 90 jeweils ein Polaritätsumschalter 91 und 92 für die gleichgerichteten Hochfrequenzanteile $\overline{FHa'}$ und $\overline{FHb'}$ so betätigt zu werden, daß für sign iz*' = sign FHa' = -sign FHb' das positive Vorzeichen und bei jedem Vorzeichenwechsel ein negatives Vorzeichen vorgegeben wird.

Eine Vertauschung der Polarität der Permanentmagneten, d.h. eine um $180^{\circ}$el gedrehte Läuferachse, bewirkt bei gleicher Justierung der Verzögerungszeiten, daß die Vorzeichenbewertung von $\overline{FHa'}$ und $\overline{FHb'}$ vertauscht werden muß. Dies kann durch ein EXKLUSIV-ODER-Gatter 93 mit negativem Ausgang geschehen, das zwischen dem Detektor 86 und den Gattern 89 und 90 angeordnet werden kann und durch eine Vorzeichenumkehr des an seinem zweiten Eingang 94 vorgegebenen Signals eine Umkehrung der Vorzeichenbewertung hervorruft. Ist die Richtung des Feldes festgestellt, so kann dessen Polarität und damit die richtige Vorzeichenbewertung gefunden werden, wenn dem in Feldrichtung eingespeisten Hochfrequenzstrom niedriger-frequente Stromblöcke unterlagert werden. Je nach Polarität des Feldes werden dadurch Sättigungserscheinungen verstärkt oder geschwächt, so daß die richtige Polarität an der Amplitudenänderung der feldsenkrecht eingekoppelten Spannung erfaßbar ist.

Die aus $\overline{FHa'}$, $\overline{FHb'}$ durch die Vorzeichenbewertung erhaltenen Komponenten $\overline{FHa}$ und $\overline{FHb}$ beschreiben den auf der Feldachse und damit ungefähr auf dem Modellvektor $\underline{FM}$ senkrechten Vektor $\overline{FH}$, so daß sich die Komponenten $\overline{FHb}$ und FMa bzw. $\overline{FHa}$ und FMb entsprechen und an den Eingängen des Vektorfilters 63 einander zugeordnet werden.

In Fig. 13 ist dargestellt, wie dieses Verfahren vorteilhaft bei der in Fig. 1 gezeigten Regelstruktur einer Vorrichtung zum feldorientierten Betrieb einer Drehfeldmaschine 1 eingefügt werden kann.

Um einen Ständerstrom mit hochfrequentem Anteil einzuprägen, wird als Umrichter vorteilhaft ein Umrichter mit eingeprägter Zwischenkreisspannung verwendet, der maschinenseitig einen Pulswechselrichter 100 enthält. Aus Schalttransistoren aufgebaute Pulswechselrichter gestatten auch Hochfrequenzen exakt zu steuern. Häufig ist aber auch ein Spannungszwischenkreisumrichter mit einem maschinenseitigen Thyristorumrichter mit Zwangslöschung einsetzbar.

Die feldorientierte Regeleinrichtung 101 ist vorteilhaft so aufgebaut, daß der Sollwert iz* des Zusatz-Sollwertgebers 102 nur auf die Amplitude des Steuervektors für den Ständerstrom wirkt. Soll z.B. auf einen mechanischen Geber überhaupt verzichtet werden, so erhält der Drehzahlregler 103 an seinem Istwerteingang einen aus dem Richtungsvektor fx abgeleiteten Frequenzwert ff. Für den Flußrechner, der aus elektrischen Größen der Maschine den Modellvektor errechnet, genügt im Prinzip z.B. ein EMK-Detektor, der aus den an 2/3-Wandlern 104, 105 mit den Vektoren u und i für Spannung und Strom gespeist wird. Vorzugsweise liefert der EMK-Detektor 106 den Integranden für einen Wechselspannungsintegrator 107. Ein derartiger Wechselspannungsintegrator ist z.B. in der deutschen Offenlegungsschrift 28 33 593 beschrieben und benutzt Rückführungssignale zur Unterdrückung von Gleichspannungsanteilen. Er weist einen Adaptionseingang auf, um mittels der Frequenz seiner Eingangssignale (hier: der Frequenz ff) den Durchgriff der Rückführungssignale so zu verstellen, daß bei der Wechselspannungsintegration eine frequenzunabhängige Phasenverschiebung auftritt. Im Schaltbild des EMK-Detektors 106 und des Wechselspannungsintegrators 107 ist ferner angedeutet, daß der Modellvektor für den Fluß aus dem Spannungsvektor durch Subtraktion des ohmschen und induktiven Spannungsabfalls gebildet ist.

Der Vektor FX am Ausgang des Wechselspannungsintegrators 107 ist an sich bei niedrigen Frequenzen wegen der Unvollkommenheit des Spannungsmodells fehlerbehaftet. Diese Fehler werden aber von einem Korrekturvektor DF ausgeglichen, der am Flußrechner-Eingang einem Glied 110 zur Vektoraddition zugeführt ist und bewirkt, daß der Modellvektor FX, dessen Komponenten gleichzeitig die Richtung fx des Richtungsvektors fx bestimmen, dem gemäß der Erfindung gebildeten Vektor FH nachgeführt wird.

Hierzu ist an den Ausgang des Flußrechners 106, 107 das Filter 108 und eine gemäß dem Mittelwertbildner 62 aufgebaute Schaltung 109 angeschlossen. Der Korrekturvektor $\underline{DF}$ wird dann von einer adaptiven Regelstufe 111 aus der Regelabweichung $\overline{FH}$ - $\underline{FX}$ gebildet. Ein eigenes Vektorfilter ist hierbei meist nicht erforderlich, da der Vektor $\overline{FH}$ nur über den Integrator 107, der bereits eine Glättung darstellt, auf die Bildung von $FX$ wirkt.

Die Funktion des im Vektorfilter der Figur 11 enthaltenen Schalters 76 kann durch einen Kennliniengeber 113 realisiert werden, der den Verstärkungsfaktor Vad für die Regelabweichung im Korrekturregler 112 betriebsabhängig vorgibt und insbesondere bei steigenden Drehzahlen den Einfluß des erfindungsgemäß ermittelten Vektors $\overline{FH}$ kontinuierlich verringert. Dadurch wird die Regelstufe 111 also an den Betriebszustand adaptiert und bei höheren Drehzahlen bestimmt nur noch der im Flußrechner 107 bestimmte Modellvektor den Richtungswinkel.

Sofern als Umrichter ein Zwischenkreisumrichter mit eingeprägtem Gleichstrom im Zwischenkreis oder ein anderes stromeinprägendes Stellglied verwendet wird, sind die Steuerspannungen am Eingang des Stromrichter-Steuersatzes ein direktes mathematisches Abbild des Stromrichter-Ausgangsstroms. Der Ständerstromvektor entspricht also dem vom Ausgang der Stromregler gelieferten Steuervektor. In diesem Fall kann der hochfrequente Zusatz-Sollwert für den Strom direkt am Steuereingang des Steuersatzes aufgeschaltet werden. Die Hochfrequenzanteile des Spannungsvektors können dann auf die geschilderte Weise direkt aus Spannungsmeßwerten gewonnen werden, um die Lage des Richtungsvektors zu erfassen.

Häufig empfiehlt sich aber die Verwendung eines spannungseinprägenden Umrichters, z.B. eines maschinenseitigen Pulswechselrichters mit vorgegebener Eingangsgleichspannung, bei dem

26

als Steuerspannungen Sollkurven für die drei maschinenseitigen Phasenspannungen vorgegeben und durch Pulsbreitenmodulation die Steuerimpulse für die Ventile der jeweils auf..
einen Wechselspannungsausgang arbeitenden Brückenzweig-Paare
gebildet werden. In diesem Fall sind also die Steuerspannungen ein Abbild des eingeprägten Ständerspannungsvektors und
gemäß der Erfindung kann direkt am Steuereingang des
Steuersatzes durch einen hochfrequentoszillierenden Zusatzvektor ein hochfrequenter Anteil des Ständerspannungsvektors
eingeprägt werden und der Richtungsvektor aus einer Messung
der auftretenden Hochfrequenzanteile des Stromes bestimmt
werden.

Für die Isolierung und Analyse der Hochfrequenzanteile kann
es aber vorteilhafter sein, anstelle von den tatsächlichen
Meßwerten am Stromrichterausgang von den entsprechenden
Steuerspannungen am Stromrichter-Steuersatz auszugehen. Für
einen spannungseinprägenden Umrichter bedeutet das, daß an
den Steuerspannungen der Ständerspannungsvektor und dessen
Hochfrequenzanteile erfaßt werden. Um diesen Hochfrequenzanteil des Spannungsvektors zu erzeugen, wird den Ständerwicklungen ein hochfrequenter Anteil des Stromvektors mittels
eines entsprechenden Zusatz-Sollvektors am Eingang der überlagerten Stromregler, die bei einem lageorientierten Betriebsverfahren ohnehin vorgesehen sind, eingeprägt.

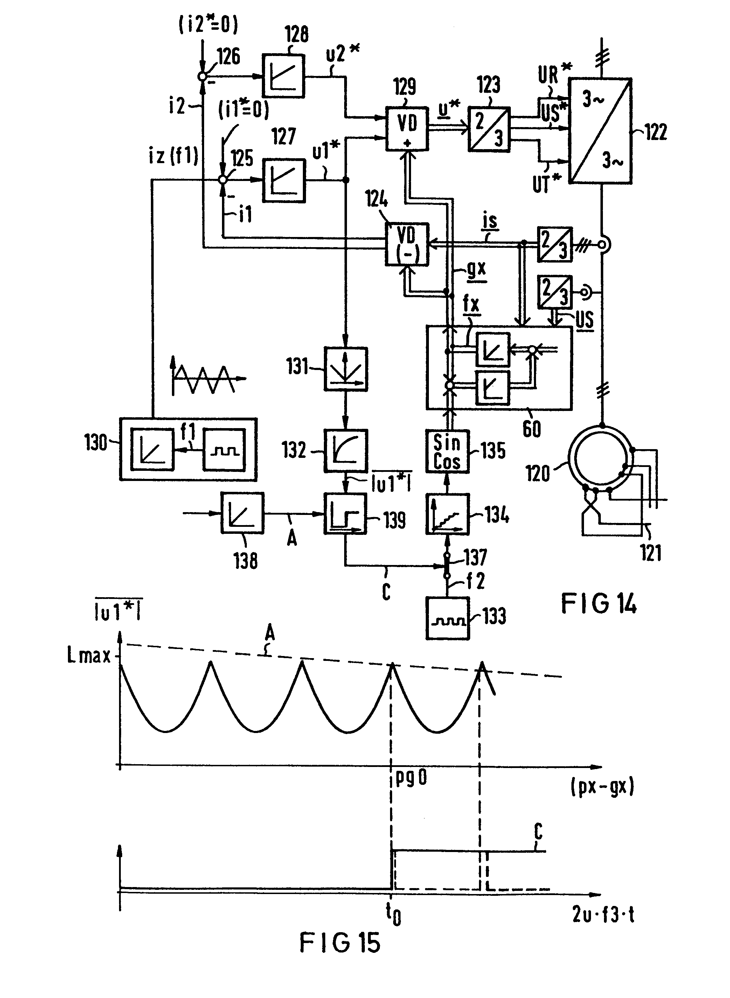

Dies wird in Fig. 14 am Beispiel einer feldorientiert betriebenen doppeltgespeisten Asynchronmaschine 120 erläutert. Dabei sind mit 121 symbolisch die Schleifringe dargestellt, die unter Vertauschung der Phasenfolge die Wicklungen
des Käfigläufers in Reihe zu den Ständerwicklungen legen. Als
spannungseinprägender Umrichter 122 kann z.B. ein Direktumrichter oder ein Zwischenkreisumrichter mit einem netzseitigen Gleichrichter und einem maschinenseitigen Pulswechselrichter vorgesehen sein. Die Steuerspannungen UR*, US* und
UT* für den (nicht dargestellten) Steuersatz des Umrichters werden mittels eines 2/3-Koordinatenwandlers 123 aus den kartesischen, ständerbezogenen Komponenten eines Steuervektors u* gebildet, der praktisch mit dem Ständerspannungsvektor identisch ist.

Diese Komponenten des Steuervektors u* werden einer Regeleinrichtung mit zwei Reglern für die feldparallele Komponente (Magnetisierungsstrom) und die feldsenkrechte Komponente (Wirkstrom) des Ständerstromvektors entnommen, wobei die Regelkreise für diese beiden Stromkomponenten auf dem Fachmann bekannte Weise voneinander entkoppelt sind. In Fig. 14 ist diese Entkopplung symbolisch dadurch dargestellt, daß einem Vektordreher 124 für den aus Strommeßwerten gewonnenen Ständerstromvektor is die Istwerte i1 und i2 für Magnetisierungsstrom und Wirkstrom entnommen und an Regelvergleichsstellen 125 und 126 mit den entsprechenden Istwerten i1* und i2* verglichen werden. Die Stromregler 127 und 128 bilden daraus die Sollwerte u1* und u2* für die feldorientierten Komponenten des Ständerspannungsvektors, der mittels des Vektordrehers 129 in die ständerorientierten Komponenten des Steuervektors u* überführt wird.

Für den Dauerbetrieb ist dabei angenommen, daß die Richtung der Feldachse bezüglich des Ständers durch den Feldwinkel fx bzw. den Richtungsvektor fx mit den kartesischen, ständerbezogenen Komponenten cos fx und sin fx beschrieben ist. Im Dauerbetrieb wird dieser Richtungswinkel mit hinreichender Genauigkeit durch den Modellvektor FM für den Fluß wiedergegeben, der von einem Flußrechner 60 durch Integration des (aus dem Ständerstromvektor is und dem Ständerspannungsvektor us gebildeten) EMK-Vektors oder durch einen anderen, möglichst einfachen Geber ermittelt. Wenn jedoch beim Stillstand der Maschine die Steuerelektronik eingeschaltet wird, steht der Integrator des Gebers 60 auf einem zufälligen, beliebigen Anfangswert.

Werden andererseits an den Anlauf der Drehfeldmaschine besondere Bedingungen gestellt, z.B. Anlauf mit mehrfachem Nennmoment ("Schwer-Anlauf"), so sollte die richtige Stellung des
Feldvektors im Stillstand und damit die richtige Läuferstellung bekannt und somit der Integrator auf den richtigen
Startwert gesetzt sein.

Dazu dient gemäß der Erfindung das folgende Suchverfahren,
mit dem vor dem betriebsmäßigen Anfahren der gesuchte Richtungsvektor bestimmt wird. Die physikalischen Grundlagen
dieses Suchverfahrens sind im folgenden nochmals dargestellt.

Im Stillstand gilt zwischen dem Ständerstromvektor $\underline{i}$ und dem
Ständerspannungsvektor $\underline{u}$ allgemein die Vektorgleichung
$\underline{u} = R \cdot \underline{i} + \underline{\underline{L}} \cdot (d\underline{i}/dt)$,
wobei $\underline{\underline{L}}$ eine Induktivitätsmatrix darstellt, deren Elemente
Funktionen der Betriebsgrößen sind, insbesondere des Ständerstromvektors und der Lage des Flußvektors und des Rotors.
Wird durch die Stromeinspeisung für den Ständerstrom ein
Richtungsvektor $\underline{gx}$ mit dem ständerbezogenen Richtungswinkel
gx und ein Betrag il(fl) vorgegeben, der mit einer Hochfrequenz fl oszilliert, ohne eine Gleichstromkomponente zu
besitzen, so verharrt der Läufer in Ruhe und in einem auf
$\underline{gx}$ bezogenen Koordinatensystem ergibt sich die Gleichung

$$\begin{pmatrix} u1 \\ u2 \end{pmatrix} = R \cdot \begin{pmatrix} i1 \\ 0 \end{pmatrix} + \begin{pmatrix} L11 & L12 \\ L21 & L22 \end{pmatrix} \cdot \begin{pmatrix} di1(f1)/dt \\ 0 \end{pmatrix} \cdot$$

Die Matrixelemente L11 und L21 sind dabei Funktionen des Differenzwinkels px - gx und geben an, wie die an den Ständerspulen auftretenden Spannungen bzw. die Komponenten u1 und
u2 des Spannungsvektors mit der Ableitung di1(f1)/dt des
eingeprägten hochfrequenten Stromanteils abhängen. Eine ähnliche Gleichung ergibt sich auch für den Fall, daß in Richtung $\underline{gx}$ eine hochfrequente Spannung eingeprägt wird, mit der
dann entsprechende Hochfrequenzanteile des Stromes bzw. der
Ableitung des Stromes verkoppelt sind.

Der mit dem ohmschen Ständerwiderstand R behaftete Anteil kann im Prinzip rechnerisch eliminiert bzw. für die weitere Betrachtung hier vernachlässigt werden.

Dann ergibt sich z.B. für die gemittelte Amplitude des Spannungsvektors

$$|\underline{u}| = \sqrt{L11^2 + L21^2} \cdot \overline{|di1(f1)/dt|}$$

eine Proportionalität zum Mittelwert der zeitlichen Ableitung des Stromes, wobei der Proportionalitätsfaktor jedoch von dem Differenzwinkel px - gx abhängig ist. Daher kann dieser Differenzwinkel aus dem jeweils vorliegenden Wert der Proportionalitätskonstante, die durch Erfassung der Spannung meßbar ist, bestimmt werden.

Bei der Ausführungsform nach Fig. 14 ist die Richtung des eingeprägten Stromes durch den Richtungsvektor $\underline{fx}$ vorgegeben, der vor dem Orten der Läuferstellung zunächst auf dem willkürlichen Startwert gx steht (d.h. $\underline{fx} = \underline{gx}$). Über den Stromregler 128 kann durch Sperren des betriebsmäßigen Wirkstrom-Sollwertes i2* die zu $\underline{gx}$ senkrechte Stromkomponente auf Null gehalten werden, während über den Stromregler 127 z.B. der Strombetrag $iz(f1) = iz0 \cdot \cos(2\pi f1 \cdot t)$ eingeprägt wird, also ein Stromvektor

$$\underline{i} = \underline{iz} = iz0 \cdot \cos(2\pi f1 \cdot t) \cdot \underline{gx}.$$

Im Ausführungsbeispiel der Fig. 14 ist hierzu ein Hochfrequenzgenerator 130 vorgesehen, der durch Integration einer Pulsfrequenz f1 anstelle einer sinusförmigen Hochfrequenz eine hochfrequente Dreieckspannung iz(f1)* erzeugt. Unter Vernachlässigung des ohmschen Anteils liefert die genannte Vektorgleichung somit für die gemittelte parallele Komponente des lageorientierten Spannungsvektors

$$\overline{|u1|} = L11 \cdot 2\pi f1 \cdot \overline{|iz(f1)*|} \text{ proportional } L11 \cdot f1 \cdot iz0.$$

Die von der Stromregelung gelieferte, zu $\underline{gx}$ parallele Komponente u1* des Steuervektors ist der entsprechenden Komponente des Spannungs-Istvektors praktisch proportional.

Mittels eines Gleichrichters 131 und eines Glättungsgliedes 132 wird daraus $|\overline{u1*}|$,d.h. die Amplitude des Hochfrequenzanteils, ermittelt.

Bei bestimmten Differenzwinkeln zwischen Läuferachse und eingeprägtem Stromvektor bestimmen hauptsächlich die Streuinduktivitäten der Ständer- und Läuferspulen die Induktivität, während bei anderen Stellungen zusätzlich die Haupt- und Koppelinduktivitäten der beiden Wicklungssysteme auftreten, so daß sich Minimalwerte und Maximalwerte in der Proportionalität zwischen der Spannungsamplitude und der Stromamplitude ergeben, die sich je nach Bauart um einen Faktor 20 - 50 unterscheiden können. Diese ausgeprägte Abhängigkeit der Induktivitäten vom Differenzwinkel zwischen dem eingeprägten hochfrequenten Anteil und der Läuferachse führt also zu einer ebenso starken Abhängigkeit für die erfaßte Amplitude $|\overline{u1*}|$ des Hochfrequenzanteils, wie Fig. 14 zeigt. Über die Messung bzw. Erfassung der Amplitude als Funktion des Differenzwinkels zwischen dem eingeprägten hochfrequenten Anteil iz* und der Läuferachse kann also der Läuferwinkel bestimmt werden.

Hierzu genügt es, den Vektor gx langsam, z.B. mit einer niederen Frequenz f3, zu drehen. Dadurch wird der Differenzwinkel px - gx stetig verändert und die Amplitude $|\overline{u1*}|$ zeigt einen Verlauf, der der Abhängigkeit der Induktivität L11 vom Differenzwinkel entspricht und z.B. bei Differenzwinkeln pg0 (Fig. 14) ausgeprägte Maxima zeigt. Nimmt während der Drehung des Richtungsvektors gx die Amplitude diesen Maximalwert bei einem Richtungswinkel gx = gx0 an, so zeigt - bis auf die Periodizität - auch der Differenzwinkel den zur maximalen Induktivität gehörenden Wert pg0 und für den Läuferwinkel ergibt sich der richtige Startwert px = gx0 + pg0, auf den der Integrator des Gebers 60 zu setzen ist.

Gemäß Fig. 14 ist die kontinuierliche Veränderung von gx durch einen Oszillator 133 sichergestellt, dessen Pulse in

31

einem Zähler 134 vom Startwert pg0 an digital integriert und mittels Funktionsgebern 135 in die Komponenten

cos $(2\pi.f2.t)$, sin $(2\pi.f2.t)$

eines Einheitsvektors überführt werden. Das Setzen des Gebers 60 kann dann z.B. dadurch erfolgen, daß die Differenz dieses Vektors von dem zunächst willkürlich vorgegebenen Modellvektor fx gebildet wird und der Integrator des Gebers vom Ausgangssignal eines Nullpunktreglers solange verstellt wird, bis Gleichheit der beiden Vektoren erreicht ist. Dadurch wird der Winkel fx des Richtungsvektors fx mit einer geringen Verzögerung dem Winkel $2\pi.f2$ nachgeführt, solange der Schalter 137 am Eingang des Zählers 134 geschlossen ist. Wird nun bei Erreichen des Maximalwertes von $|\overline{u1}|$ der Schalter 137 geöffnet, so ist einerseits die richtige Läuferlage geortet, andererseits der Geber 60 auf den richtigen Startwert fx = px gesetzt.

Für die Erfassung des Maximalwertes von $|\overline{u1^*}|$ bzw. der maximalen Induktivität Lmax kann gemäß Fig. 14 vorteilhaft zunächst eine Größe A > Lmax vorgegeben werden, die mittels eines Integrators 138 langsam und stetig abgesenkt wird, wie dies in Fig. 15 dargestellt ist. Zum Zeitpunkt t0, d.h. beim Differenzwinkel $2\pi.f3.t0 = gx0$ überschreitet die Amplitude $\overline{u1^*}$ erstmals den Wert A und ein entsprechender Schwellwertdetektor 139 löst ein Signal C zum Öffnen des Schalters 137 aus. Damit ist der Suchvorgang für den Läuferwinkel px = gx0 + pg0 beendet und der Geber liefert den Richtungswinkel fx = px.

Für den weiteren Anlauf können nun entsprechende Eingabeeinrichtungen, z.B. ein Flußregler und ein Drehzahlregler, für die Sollwerte i1* und i2* freigegeben werden.

Das hier für den Fall einer eingeprägten hochfrequenten zusätzlichen Stromkomponente dargestellte Verfahren läßt sich, bei entsprechender Anpassung der Regelkreise und des Steuersatzes, auch für eine eingeprägte Spannungskomponente mit Erfassung der erzeugten Stromwelligkeit anwenden. Außerdem kann man auch auf die künstliche Einprägung einer Anregung

32

mit einem hochfrequenten Zusatz-Sollwert verzichten, indem man die beiden Stromsollwerte i1* und i2* auf dem Wert Null hält und die unstetige Arbeitsweise von Stromrichter-Stellgliedern ausnutzt. Entscheidungskriterium ist dann die Stromwelligkeit in den lageorientierten Strom-Istwertkomponenten: der Richtungsvektor ist dann richtig gesetzt, wenn die Welligkeit der parallelen Stromist-Komponente minimal und die Welligkeit der senkrechten Stromist-Komponente maximal ist.

Patentansprüche

1. Verfahren zur Bestimmung des Flußwinkels einer Drehfeldmaschine mit folgenden Merkmalen:

a) einer elektrischen Zustandsgröße des Ständerwicklungssystems wird ein hochfrequenter Anteil eingeprägt, wobei
unter den elektrischen Zustandsgrößen des Ständerwicklungssystems die Ströme und Spannungen in den einzelnen
Ständerspulen verstanden sind und die Achsen derjenigen
Spulen, denen der hochfrequente Anteil eingeprägt wird,
die Richtung des eingeprägten hochfrequenten Anteils
bestimmen,

b) aus einem eine andere elektrische Zustandsgröße des Ständerwicklungssystems abbildenden Zustandssignal wird die
Amplitude eines Hochfrequenzanteils erfaßt, und

c) aus der Abhängigkeit der erfaßten Amplitude von der Richtung des eingeprägten hochfrequenten Anteils wird der
Flußwinkel bestimmt.

2. Verfahren nach Anspruch 1, d a d u r c h   g e k e n n -
z e i c h n e t ,   daß

a) der hochfrequente Anteil eingeprägt wird, indem bei praktisch stillstehender Maschine einem der beiden elektrischen Zustandsvektoren (is, us) der Ständerwicklung ein
oszillierender Vektor (iz(fl)) mit vorgegebener Richtung
(gx) eingeprägt wird, wobei unter den beiden elektrischen
Zustandsvektoren der Ständerwicklungen der Ständerstromvektor und der Ständerspannungsvektor verstanden sind,

b) die Amplitude ($|\overline{u1*}|$) des Hochfrequenzanteils erfaßt wird,
indem ein den anderen Zustandsvektor beschreibenden Zustandssignal (u1*) gleichgerichtet und geglättet wird, und

c) der Flußwinkel (px) bestimmt wird, indem für die Amplitude
($|\overline{u1*}|$) des Hochfrequenzanteils ein Grenzwert (A) vorgegeben wird, der einem bestimmten Wert (pg0) des Differenzwinkels (px-gx) zwischen Fluß und oszillierenden Vektor zugeordnet ist; die Richtung (gx) des oszillierenden Vektors bis zu einem Richtungswinkel geändert wird, bei dem die Amplitude den Grenzwert erreicht; und als Flußwinkel die Summe aus dem bestimmten Wert des Differenzwinkels und dem Richtungswinkel gebildet wird. (Figur 14)

3. Verfahren nach Anspruch 1, d a d u r c h   g e k e n n -
z e i c h n e t ,  daß eine Ständerstromregelung, der ein Strom-Sollwert (iz(fl)*) für den hochfrequenten Anteil vorgegeben wird, ein Steuersignal (ul*, u2*) liefert; daß mittels des Steuersignals ein das Ständerwicklungssystem der Maschine speisender, spannungseinprägender Umrichter gesteuert wird; und daß als die andere elektrische Zustandsgröße abbildendes Zustandssignal das Steuersignal ausgewertet wird. (Figur 14)

4. Verfahren zum lageorientierten Betrieb einer Drehfeldmaschine mittels eines den Richtungsvektor eines rotierenden Bezugssystems festlegenden Lagegebers mit folgenden Merkmalen:

a) aus einem lageorientierten Sollvektor (i*) für einen der beiden elektrischen Zustandsvektoren der Ständerwicklung, einem gegenüber der Rotationsfrequenz des Bezugssystems hochfrequenten Zusatz-Sollwert (iz*) für diesen Zustandsvektor und den Signalen (fx) des Lagegebers wird ein auf den Ständer bezogener Steuervektor (ais, wis) gebildet, wobei unter den beiden elektrischen Zustandsgrößen der Ständerwicklung der Ständerstromvektor (i) und der Ständerspannungsvektor (u) verstanden wird,

b) mittels des Steuervektors wird ein Umrichter gesteuert, der den Ständerwicklungen den dem Sollvektor und den Zusatz-Sollwert entsprechenden elektrischen Zustandsvektor einprägt,

c) aus einem den anderen der beiden elektrischen Zustandsvektoren abbildenden Zustandssignal (u) werden die Hochfrequenzanteile isoliert, und

d) aus den Hüllkurven ($\overline{FH}$) der Hochfrequenzanteile (FH) bilder elektrische Geber die den Richtungsvektor ($\underline{fx}$) festlegenden Signale. (Figur 10)

5. Verfahren nach Anspruch 4, d a d u r c h   g e - k e n n z e i c h n e t ,   daß der Ständerstromvektor durch den lageorientierten Sollvektor und den Zusatz-Sollwert bestimmt und ein den Ständerspannungsvektor abbildendes Signal verwendet wird.

6. Verfahren nach Anspruch 5, d a d u r c h   g e - k e n n z e i c h n e t ,   daß der Steuervektor durch Regelung des Ständerstromvektors gebildet wird, daß mit dem Steuervektor ein die Ständerspannung einprägender Umrichter gesteuert wird, und daß die den Ständerspannungsvektor abbildenden Signale aus dem Steuervektor gebildet werden.

7. Verfahren nach Anspruch 4, d a d u r c h   g e - k e n n z e i c h n e t ,   daß durch den Zusatz-Sollwert ein hochfrequenter Strom in einer Ständerwicklung vorgegeben wird und das Zustandssignal aus den Spannungen an Ständerwicklungen bestimmt wird, die vom hochfrequenten Strom nicht durchflossen werden.

8. Verfahren nach Anspruch 5, d a d u r c h   g e - k e n n z e i c h n e t ,
- daß als Zustandssignal aus dem Ständerspannungsvektor die Komponenten eines den Fluß beschreibenden Modellvektors ermittelt werden,
- daß als Komponenten des Richtungsvektors die über eine Halbperiode der Hochfrequenz gemittelten Amplituden der Hochfrequenzanteile der Modellvektor-Komponenten gebildet werden.

9. Verfahren nach Anspruch 8, d a d u r c h   g e - k e n n z e i c h n e t ,   daß aus der Regelabweichung

36

zwischen dem Modellvektor ($\underline{FX}$) und dem Richtungsvektor ($\overline{FH}$) ein Korrekturvektor ($\underline{DF}$) gebildet und der Modellvektor mittels des Korrekturvektors verstellt wird, bis die Regelabweichung verschwindet. (Figur 9)

10. Verfahren nach Anspruch 4, d a d u r c h   g e - k e n n z e i c h n e t ,   daß die Hochfrequenzanteile jeweils gleichgerichtet, geglättet und mit einem nach jedem Nulldurchgang ihrer Hüllkurven wechselnden Vorzeichen bewertet werden.

11. Verfahren nach Anspruch 10, d a d u r c h   g e - k e n n z e i c h n e t ,   daß das Vorzeichen aus der relativen Phasenlage des isolierten Hochfrequenzanteils (FHa, FHb) zum hochfrequenten Zusatz-Sollwert (iz*) ermittelt wird. (Fig. 8)

12. Verfahren nach Anspruch 4, d a d u r c h   g e - k e n n z e i c h n e t ,   daß als ständerbezogene Komponenten des Richtungsvektors die Grundschwingungsanteile der Hüllkurven gebildet werden. (Figur 7)

13. Anwendung des Verfahrens nach einem der Ansprüche 1 bis 12 zur Ortung der Läuferstellung einer permanent erregten Synchronmaschine im Stillstand und beim Betrieb mit niedrigen Drehzahlen.

14. Anwendung des Verfahrens zur Ermittlung der Feldachse im Stillstand und im Langsamlauf einer Asynchronmaschine oder einer Synchronmaschine, deren Läuferwicklung mit einem Feldstrom gespeist wird.

15. Vorrichtung zum Betrieb einer Drehfeldmaschine mit
a) Mitteln zur Erfassung der Ständerspannungen,
b) einem Bandpaß oder Tiefpaß (61) zum Isolieren von Hochfrequenzanteilen der Ständerspannungen,

c) einen Mittelwertbildner (62) zur Bildung der Hüllkurven der Hochfrequenzanteile und Mittel zur Bestimmung der Komponenten des Richtungsvektors aus den Hüllkurven,

d) einer Regeleinrichtung (65 - 68) mit einem Eingang zur Vorgabe einer Führungsgröße (ff*) für die Komponenten des Ständerstroms in einem vom Richtungsvektor abhängigen Bezugssystem, einem Zusatz-Sollwertgeber (69) zur Erzeugung eines hochfrequenten Zusatz-Sollwertes (iz*) und mit einem Ausgang, an dem ein Steuersignal für den Ständerstrom abgreifbar ist, und

e) einem Stromrichter (64'), der dem Ständer einen dem Steuersignal entsprechenden Strom einprägt.

16. Vorrichtung nach Anspruch 11, g e k e n n z e i c h - n e t  d u r c h  einen Flußrechner, der aus den Ständerspannungen die Komponenten eines den Fluß beschreibenden Modellvektors ($\underline{FM}$) berechnet, wobei diese Komponenten den Eingängen des Bandpasses oder Hochpasses (61) zugeführt sind.

17. Vorrichtung nach Anspruch 16, d a d u r c h  g e - k e n n z e i c h n e t ,  daß die Ausgangssignale ($\overline{FH}$) des Mittelwertbildners und die Komponenten des Modellvektors ($\underline{FM}$) einem Umschalter (76) in einem Vektorfilter zugeführt sind, an dessen Ausgang die Komponenten des Richtungsvektors ($\underline{fx}$) abgegriffen sind. (Figur 7)

18. Vorrichtung nach Anspruch 15, d a d u r c h  g e - k e n n z e i c h n e t ,  daß der Stromrichter ein Zwischenkreis-Umrichter mit eingeprägter Zwischenkreisspannung und mit einem maschinenseitigen Wechselrichter mit Zwangslöschung oder insbesondere einem Pulswechselrichter ist.

19. Vorrichtung nach Anspruch 15, d a d u r c h  g e - k e n n z e i c h n e t ,  daß der Zusatzsollwert auf eine Steuergröße (ais) für die Amplitude des Stromrichter-Ausgangsstromes wirkt und daß ein Winkeldiskriminator (65) vorgesehen ist, der die Phasenlage des Stromrichter-Ausgangsstromes jeweils bei einer Drehung des Richtungsvektors um
60$^O$el weiterschaltet. (Figur 6)

20. Vorrichtung nach Anspruch 16, g e k e n n z e i c h -
n e t    d u r c h   eine Nachführeinrichtung (109, 111),
mit der der Modellvektor (FX) dem aus den Hochfrequenzanteilen gebildeten Richtungsvektor (FH) nachgeführt wird.

21. Vorrichtung nach Anspruch 15, d a d u r c h   g e -
k e n n z e i c h n e t ,   daß der Stromrichter ein spannungseinprägender Stromrichter ist und dessen Steuerspannungen als Ständerspannungen erfaßt werden.

FIG 1

FIG 2

FIG 3

FIG 4

FIG 5

FMa

0

$\frac{\pi}{2}$     $\pi$     $\frac{3\pi}{2}$     $2\pi$     fx

FMb

FIG6     fx

FHa     fx

FHb     fxo

FIG7     fx

$\overline{FHb} = \cos fx$

0     $\frac{\pi}{2}$     $\pi$     $\frac{3\pi}{2}$     $2\pi$     fx

$\overline{FHa} = \sin fx$

FIG8     fx

0     $\frac{\pi}{2}$     $\pi$     $\frac{3\pi}{2}$     $2\pi$

IR     WR+     fx

WR−

IS     fx

WS+

WS=

IT     WT+     fx

WT−     fx

fxo

FIG9     fx

0  $\pi/6$     $\pi/2$     $5\pi/6$     $7\pi/6$     $3\pi/2$     $11\pi/6$

FIG 10

FIG 11

FIG 12

FIG 13

FIG 14

FIG 15

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | DE-B-2 132 178 (SIEMENS AG) | | H 02 P 5/40<br>H 02 P 7/62 |
| | --- | | |
| A | DE-A-3 347 549 (SIEMENS AG) | | |
| | --- | | |
| A | DE-A-3 026 348 (SIEMENS AG) | | |
| | --- | | |
| A | REGELUNGSTECHNIK, Band 32, Nr. 1, 1984, Seiten 18-26, DE; R. GABRIEL: "Mikrorechnergeregelte Asynchronmaschine, ein Antrieb für hohe dynamische Anforderungen"<br>* Seite 21, Abbildung 4, Kapitel 4 * | 1,4,15 | |

RECHERCHIERTE SACHGEBIETE (Int Cl 4)

H 02 P

Der vorliegende Recherchenbericht wurde für alle Patentansprüche erstellt

| Recherchenort | Abschlußdatum der Recherche | Prüfer |
|---|---|---|
| DEN HAAG | 25-03-1987 | BEYER F. |